# EUROPEAN PATENT APPLICATION

(11) **EP 3 062 585 A1**
(43) Date of publication of application: **31.08.2016**
(21) Application number: 14856293.7
(22) Date of filing: 21.10.2014
(51) Int. Cl.: H05B 37/02

(54) **LED POWER SOURCE CURRENT CONTROL DEVICE**

(30) Priority: 21.10.2013 KR 20130125165
(71) Applicant: Hyunjoo Idc Co., Ltd., Yongin-si, Gyeonggi-do 446-904 (KR)
(72) Inventor: JEONG, Gyu Beom, Yongin-si Gyeonggi-do 446-930 (KR)
(74) Representative: Parker, Andrew James
(86) International application number: PCT/KR2014/009899
(87) International publication number: WO 2015/060623

(57) **Abstract**

The purpose of the present invention is to provide an LED power source current control device having a high power factor and a low total harmonic distortion (THD) for supplying current to an LED by a semiconductor chip which uses a current distribution scheme, not a switching scheme. To this end, the present invention provides an LED power source current control device comprising: a current control device for controlling over-current to be output as a constant voltage when input voltage is input as an overvoltage; a rectification unit for outputting a rectified voltage by rectifying an AC voltage which is output from the current control device; a constant voltage output unit connected to the output end of the rectification unit to protect the LED from the overvoltage and to output constant voltage or more; a current distribution unit for receiving the rectified voltage and dividing a current corresponding to the magnitude of the rectified voltage to output the current; and a connector connected to one or more LEDs to supply current, which is output from the constant voltage output unit and the current distribution unit, to the LEDs.

## Description

### Technical Field

The present invention relates to a power source distribution device for supplying power source to an LED (Light Emitting Diode), and in particular to an LED power source current control device which is able to supply current to an LED in such a way to use a current distribution type chip, not a switching type.

### Background Art

In recent years, an illumination device is employing a lot of LEDs (Light Emitting Diode) thanks to a low power consumption and high efficiency and long service life thereof.

The important matters to consider in case of the aforementioned illumination device is an illumination efficiency and a system stability. The illumination efficiency of the LED illumination device may be determined based on the power efficiency of an electricity drive and the efficiency of illumination which is supplied to the LEDs. The stability of the LED illumination device may be determined based on the heat management of LEDs, an electricity drive, a system error detection, a system protection function, and the number of electron elements.

Moreover, a switching circuit configured to operate LEDs in response to an input voltage is necessary so as to use the LEDs as a light source. The conventional switching circuit has a technical problem wherein the power factor is bad due to a phase difference between a voltage and a current, and an electromagnetic wave (EMI: Electro Magnetic Interference) issue should be resolved. More specifically, a plurality of switching LED drivers may generate high frequency switching noises during a second phase which may have effect on electric conductions and a measurement result of an emission EMI in the LED illumination device. To abide by the EMI standards, more efforts to resolve such an EMI are necessary. As an example of the aforementioned efforts, there are a RC snubber network of a switch node and an EMI filter at an output stage.

Furthermore, a conventional switching circuit includes a voltage sensing circuit or a cycle sensing circuit, wherein a switch corresponding to an LED can be controlled in such a way to sense the size of a voltage and an input cycle of the voltage. Since the conventional switching circuit, however, includes the voltage sensing circuit or the cycle sensing circuit, the size of the whole circuits may inevitably increase. If a transformer, for example, a SMPS, or an electrolytic condenser are employed, power consumption may increase, and service life may decrease.

The U.S. patent registration no. US6989807 discloses a technology wherein the LEDs can be driven with a voltage which changes in real time, in such a way to control a plurality of switches connected in parallel in a plurality of LED groups which are connected in series, more specifically, under the condition of an AC input voltage the voltage of which changes in real time. The U.S. patent registration no. US6989807 describes a voltage sensing circuit configured to sense an input voltage. In the aforementioned conventional technologies, it is impossible to manufacture a small-sized circuit. If a rated voltage of over 100% is inputted, a lot of heat may generate at the switching circuit, which may result in increased power consumption and lowered efficiency. Any malfunction may increasingly occur at the circuits due to the increased heat at the switching circuit.

### Disclosure of Invention

Accordingly, it is an object of the present invention to provide an LED power source current control device which may have a high power factor and a low THD (Total Harmonic distortion) by supplying current to an LED in such a way to use a current distribution type semiconductor chip, not a switching type.

It is another object of the present invention to provide an LED power source current control device which may make it possible to resolve a problem caused due to an over voltage if a voltage over a rated voltage is inputted, in such a way to provide a fuse circuit unit and a varistor circuit unit.

It is further another object of the present invention to provide a compact-sized and lighter LED power source current control device wherein major circuit units are formed of semiconductor chips.

It is still further another object of the present invention to provide an LED power source current control device which is able to prevent any circuit malfunction which may be caused due to an over current and a high temperature, in such a way to provide an over current and thermal protection circuit.

It is yet still further another object of the present invention to provide an LED power source current control device which is able to protect an LED from an over current in such a way to supply constant current to the LED by a constant current scheme.

Other objects of the present invention will be readily understood by the descriptions on the embodiments below.

To achieve the above objects, there is provided an LED (Light Emitting Diode) power source current control device, which may include, but is not limited to, a current control unit which is configured to allow a constant current to be outputted in such a way to control an over current if an input voltage is inputted in the form of an over voltage; a rectification unit which is configured to output a rectification voltage in such a way to rectify an alternating current voltage which is outputted from the current control unit; a constant voltage output unit which is connected to an output terminal of the rectification unit and is able to protect an LED from the over voltage and output a voltage over a constant voltage; a current distribution unit which is configured to receive the rectification voltage and distribute the current based on the size of the rectification voltage and output the current; and a connector which is connected to one or more LEDs and is configured to supply to the LED the current which is outputted from the current distribution unit.

Here, the current control unit may include, but is not limited to, a fuse circuit unit which includes a fuse and is configured to disconnect the fuse if a voltage is inputted, wherein the voltage irreversibly causes an abnormal state in the operation of any of the rectification unit, the constant voltage output unit and the current distribution unit; and a varistor circuit unit equipped with a varistor which is able to prevent any abnormal operation due to an over current in such a way to flow a part of the over current to the ground, wherein the over current generates due to a surge voltage if the surge voltage generates.

Here, there is further provided a temperature control unit which includes a variable resistor and is configured to control the heat which generates at the LED power source current control device in such a way to control the variable resistor.

Here, the current distribution unit is formed of a semiconductor chip which is able to minimize the phase angles of current and voltage and provide a low THD (Total Harmonic Distortion) by which any high power factor and voltage distortion can be prevented.

Here, the current distribution unit comprises a current control setting circuit unit which is able to control the current outputted from the current distribution unit to be evenly outputted.

Here, there are further provided a PCB (Printed Circuit Board) substrate at which the current control unit, the rectification unit, the constant voltage output unit, the current distribution unit and the connector are mounted; and a heat radiation substrate which is made of a metal having a high heat conductivity and is disposed contacting with the PCB substrate.

Here, one or more holes are formed at the PCB substrate, and the heat radiation substrate and the PCB substrate contact with each other using metallic pins via the holes.

Here, one or more connectors are connected via the connector, and the LED connected to the constant voltage output unit among the LEDs is configured to always operate irrespective of an input voltage, and the LED connected to the current distribution unit among the LEDs is configured to operate by the current which is distributed by the current distribution unit in response to the input voltage.

### Advantageous Effects

The compact-sized and slim LED power source current control device can be made into a module in such a way that a switching operation is carried out using a semiconductor chip, so it can be readily built in a lighting fixture.

Moreover, any electromagnetic wave (EMI) problems can be resolved in such a way to supply current to an LED via a current distribution type semiconductor chip.

Furthermore, the configuration is simple, less components are used, while reducing any error, and the manufacturing does not cost a lot.

### Brief Description of Drawings

Figure 1 is a view illustrating the configuration of an LED power source current control device according to an embodiment of the present invention.
Figure 2 is a view illustrating a circuit configuration of an LED power source current control device according to an embodiment of the present invention.
Figure 3 is a view illustrating the layout of components of an LED power source current control device according to an embodiment of the present invention.
Figure 4 is a view illustrating a voltage outputted from a constant voltage output unit and the operation thereof according to an embodiment of the present invention.
Figure 5 is a view illustrating a configuration wherein a heat radiation substrate is mounted at a PCB substrate of an LED power source current control device according to an embodiment of the present invention.
Figure 6 is a view illustrating a configuration wherein a heat conduction can be readily carried out by adding a heat radiation substrate to a heat radiation plate according to an embodiment of the present invention.

### Best modes for carrying out the invention

According to one aspect of the present invention, there is provided an LED (Light Emitting Diode) power source current control device, which may include, but is not limited to, a current control unit which is configured to allow a constant current to be outputted in such a way to control an over current if an input voltage is inputted in the form of an over voltage; a rectification unit which is configured to output a rectification voltage in such a way to rectify an alternating current voltage which is outputted from the current control unit; a constant voltage output unit which is connected to an output terminal of the rectification unit and is able to protect an LED from the over voltage and output a voltage over a constant voltage; a current distribution unit which is configured to receive the rectification voltage and distribute the current based on the size of the rectification voltage and output the current; and a connector which is connected to one or more LEDs and is configured to supply to the LED the current which is outputted from the current distribution unit.

Here, the present invention is characterized in that the current control unit may include, but is not limited to, a fuse circuit unit which includes a fuse and is configured to disconnect the fuse if a voltage is inputted, wherein the voltage irreversibly causes an abnormal state in the operation of any of the rectification unit, the constant voltage output unit and the current distribution unit; and a varistor circuit unit equipped with a varistor which is able to prevent any abnormal operation due to an over current in such a way to flow a part of the over current to the ground, wherein the over current generates due to a surge voltage if the surge voltage generates.

Here, the present invention is characterized in that there is further provided a temperature control unit which includes a variable resistor and is configured to control the heat which generates at the LED power source current control device in such a way to control the variable resistor.

Here, the present invention is characterized in that the current distribution unit is formed of a semiconductor chip which is able to minimize the phase angles of current and voltage and provide a low THD (Total Harmonic Distortion) by which any high power factor and voltage distortion can be prevented.

Here, the present invention is characterized in that the current distribution unit comprises a current control setting circuit unit which is able to control the current outputted from the current distribution unit to be evenly outputted.

Here, the present invention is characterized in that there are further provided a PCB (Printed Circuit Board) substrate at which the current control unit, the rectification unit, the constant voltage output unit, the current distribution unit and the connector are mounted; and a heat radiation substrate which is made of a metal having a high heat conductivity and is disposed contacting with the PCB substrate.

Here, the present invention is characterized in that one or more holes are formed at the PCB substrate, and the heat radiation substrate and the PCB substrate contact with each other using metallic pins via the holes.

Here, the present invention is characterized in that one or more connectors are connected via the connector, and the LED connected to the constant voltage output unit among the LEDs is configured to always operate irrespective of an input voltage, and the LED connected to the current distribution unit among the LEDs is configured to operate by the current which is distributed by the current distribution unit in response to the input voltage.

The present invention may be modified in various ways and may have a variety of embodiments, and specified embodiments are illustrated in the drawings and will be described in the detailed descriptions, which is not intended to limit the present invention to such specified embodiments. It should be understood as including all conversions, equivalents and substitutions which may be included in the concept and technical range of the present invention.

The terms throughout the present invention are used to describe specified embodiments, not being intended to limit the present invention. The terms of first, second, etc. and the aforementioned terms will be used to only distinguish one component from another component, and unless otherwise stated different according to the contexts, a single form expression should be interpreted as including plural forms.

The embodiments of the present invention will be described with reference to the accompanying drawings.

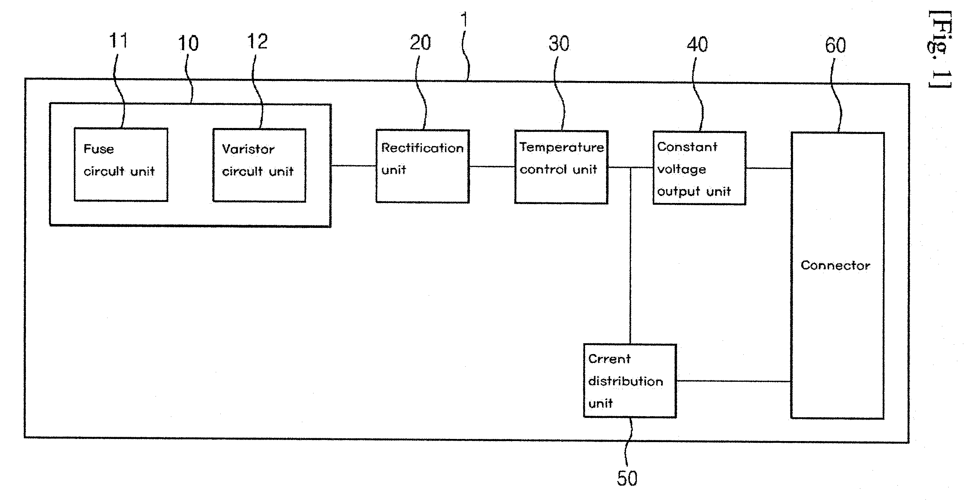

Figure 1 is a view illustrating the configuration of an LED power source current control device according to an embodiment of the present invention.

The LED power source current control device 1 according to the present invention may include, but is not limited to, a current control unit 10, a rectification unit 20, a temperature control unit 30, a constant voltage output unit 40, a current distribution unit 50 and a connector 60.

If an input voltage is inputted in the form of an over voltage, the current control unit 10 will control the over voltage into a constant voltage. If the input voltage is inputted in the form of an over voltage which is out of a normal input voltage, the LED may abnormally operate since there may be an error at the voltage and current that the LED power source control device 1 supplies to the LED. Since the current distribution unit 50 is formed of a semiconductor chip in the present invention, it may be weak to the over voltage and the over current. The current control unit 10 according to the present invention, therefore, is able to prevent any errors at the LED power source current control device 1 in such a way to block the over voltage if the input voltage is an over voltage or a part of the over current is controlled to flow to the ground, whereby any damages to the circuits due to the over current can be prevented.

For this operation, the current control unit 10 may include, but is not limited to, a fuse circuit unit 11, and a varistor circuit unit 12.

The fuse circuit unit 11 may include a fuse and is configured to disconnect the fuse if a very high over voltage is inputted, which voltage may irreversibly cause an abnormal state in the operation of any of the rectification unit 20, the temperature control unit 30, the constant voltage output unit 40 and the current distribution unit 50, thus blocking the input of such an over voltage.

The varistor circuit unit 12 may include a varistor and is configured to flow a part of the over current due to a surge voltage to the ground if the surge voltage generates, thus preventing any abnormal operation due to the over voltage.

More specifically, the fuse circuit unit 11 is able to block the over current if an irreversible circuit damage to the LED power source current control device 1 occurs since a very high over current is inputted, thus carrying out an operation to protect the LED power source current control device 1, and the varistor circuit unit 12 may eliminate any over current if an instant surge voltage is inputted, whereupon the operation of the LED power source current control device 1 can be normally carried out.

The rectification unit 20 may be formed of a bridge diode circuit and is able to output a rectification voltage by rectifying the alternating current (AC) into a direct current (DC).

The temperature control unit 30 may include a variable resistor and is able to reduce the heat which might generate at the LED power source current device 1 by controlling the operation current in such a way to change the value of the variable resistor if the temperature of the LED power source current control device 1 abnormally increases.

The constant voltage output unit 40 may include a condenser and is able to output a voltage over a constant voltage in such a way to store electric charges if the rectification voltage outputted from the rectification unit 20 is a high voltage and discharge the stored electric charges if it is a low voltage.

The voltage outputted from the constant voltage output unit 40 is connected to the first pin of the connector 60, thus a voltage over the constant voltage can be always supplied to the LED connected to the first pin of the connector 60.

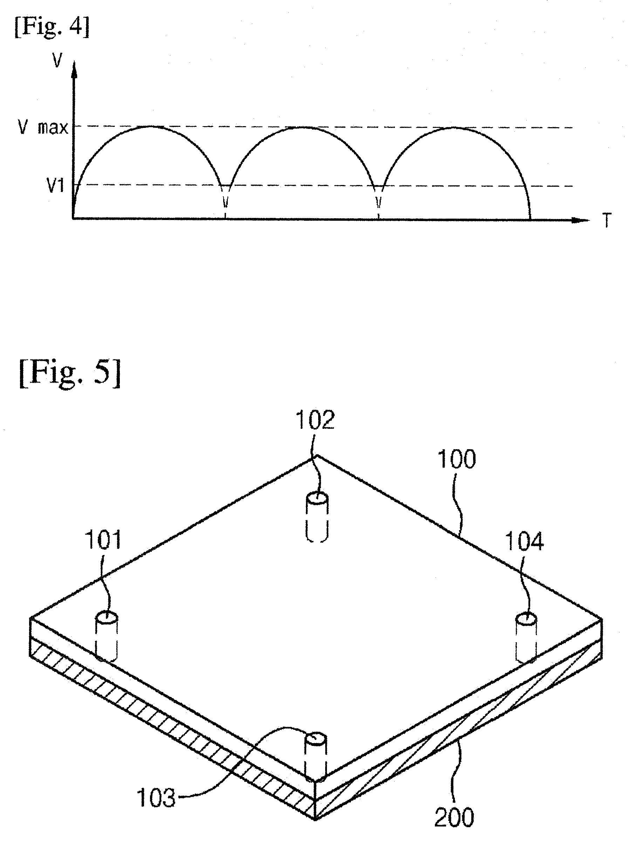

The voltage outputted from the constant voltage output unit 40 and the operation thereon will be described later with reference to Figure 4.

The current distribution unit 50 is configured to receive a rectification voltage which is outputted from the rectification unit 20 and distribute and output the rectification current based on the size of the rectification voltage. The distribution current outputted from the current distribution unit 50 is connected to the connector 60 and is supplied to the LED.

In particular, in the present invention, since the current distribution unit 50 is formed of a semiconductor chip which is able to minimize the phase angles of the current and the voltage, it has a high power factor feature. Moreover, it is formed of a semiconductor chip which is equipped with a low THD (Total Harmonic Distortion) so as to prevent any distortion of the voltage.

The current distribution unit 50 may include a current control setting circuit unit 51 which is configured to control the current, which is outputted from the current distribution unit 50, to be evenly outputted.

The connector 60 may include a plurality of pins, wherein each pin is connected to the constant voltage output unit 40 or the current distribution unit 50, thus receiving current. For this reason, the LED which will receive the current from the pin connected to the constant voltage output unit 40 can constantly operate all the time irrespective of the size of the input voltage, and the LED which will receive the current from the pin connected to the current distribution unit 50, can carry out a required operation based on the size of the input voltage.

In the present invention, the LEDs of different characteristics (for example, colors, brightness, etc.) can be connected to the connector 60, whereby the illumination characteristics can change in response to the input voltages, and the illumination intensities can change in response to the currents distributed by the current distribution unit 50.

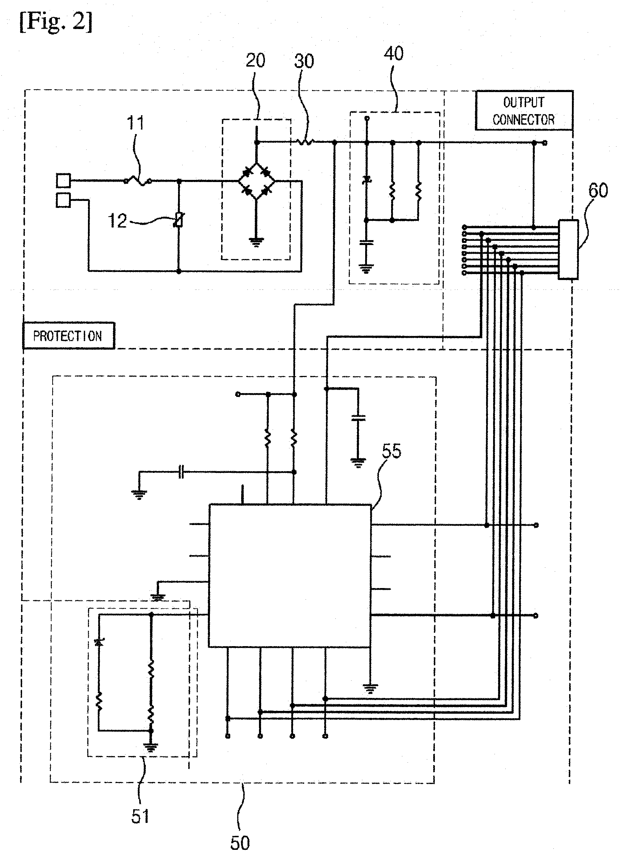

Figure 2 is a view illustrating a circuit configuration of the LED power source current control device according to an embodiment of the present invention.

As illustrated in Figure 1, the current control unit 10 may include, but is not limited to, a fuse 11, and a varistor 12. The rectification unit 20 may include diodes which may form a bridge rectification circuit. The voltage outputted via the temperature control unit 30 may be inputted into the current distribution unit 50, and the current is distributed and outputted to the connector 60. The temperature control unit 30 may be omitted from the circuit configuration. The constant voltage output unit 40 may include a diode SD1, a condenser C1 and resistors SR1 and SR2. If a rectification voltage is inputted, electric charges are charged in the condenser C1, and if a high rectification voltage drops below a constant voltage VI, the electric charges stored in the condenser C1 are discharged, whereupon voltage and current can be supplied to the first pin of the connector 60. In this way, a voltage over the constant voltage VI can be always supplied to the first pin of the connector 60.

The current distribution unit 50 may distribute the current inputted into the current distribution unit 50 based on a current control of the current control setting circuit unit 51 and output to the second through eighth pins of the connector 60. Here, the current distribution unit 50 may distribute the currents having different values based on the input voltage and output to the second through eighth pins of the connector 60 or it may distribute the same currents and output to the second through eighth pins of the connector 60.

The current distribution function of the current distribution unit 50 may be carried out at the semiconductor chip 55. In the present invention, various output schemes may be carried out based on the designs of the semiconductor chip 44. It may be designed to reduce the phase angles of the voltage and the current, thus providing a high power factor feature. Moreover, the present invention is employing the semiconductor chip 55 without using a transformer and an electrolytic condenser like in the conventional SMPS, whereupon as compared to the conventional SMPS, the cost is low, and a compact-sized configuration is available, and a service life is long.

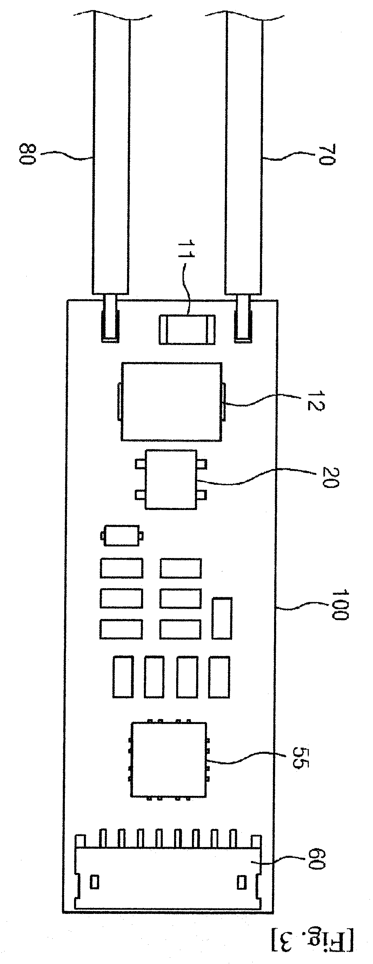

Figure 3 is a view illustrating the layout of components of an LED power source current control device according to the present invention.

The LED power source current control device 1 according to the present invention may include various electronic components which are mounted at a PCB substrate 100.

The LED power source current control device 1 may be formed of small-sized electronic components, for example, a semiconductor chip, etc. For this reason, a compact size and lightness product is available. Since the input voltage can be inputted via electric cables 70 and 80, such components can be easily built in the lighting fixture.

Moreover, since the LED can be connected via the connector 60, it is possible to readily manufacture the LEDs having various sizes, shapes and characteristics by connecting the LEDs, which match with the operation range of the LED power source current control device 1 of the present invention, to the connector.

According to the present invention, it is possible to provide illuminations which may satisfy user's various needs in such a way to connect to the connector 60 the LED modules which have various sizes, shapes and characteristics.

Figure 4 is a view for describing the voltage outputted from the constant voltage output unit and the operation thereof according to an embodiment of the present invention.

The voltage outputted from the constant voltage output unit 40 according to the present invention can be outputted in the form a voltage over a constant voltage VI value irrespective of the input voltage since the electric charges stored in the condenser C1 are outputted.

For better understanding, the voltage VI is assumed as the minimum operation voltage of the LED which will carry out the operations at the lowest voltage among the LEDs connected to the lighting fixture.

In this case, all the LEDs of the conventional lighting fixture may not operate if the input voltage is below the voltage VI. In the present invention, since the voltage over the voltage VI can be outputted irrespective of the input voltage, a minimum number of the LEDs can operate.

In the present invention, all the LEDs can be configured to carry out the required operations based on change in the design of the current control setting circuit unit 51.

Figure 5 is a view illustrating a configuration wherein a heat radiation substrate is mounted at a PCB substrate of an LED power source current control device according to an embodiment of the present invention.

In the LED power source current control device 1 according to the present invention, the semiconductor chip 55 may have an error during the operation if it is exposed to a high temperature for a long time since the current distribution unit 50 is formed of the semiconductor chip 55.

In the present invention, a heat radiation substrate 200 made of a metal having a high heat conductivity is attached to the PCB substrate 100 at which the current control unit 10, the rectification unit 20, the constant voltage output unit 40, the current distribution unit 50 and the connector 60 are mounted, whereby the semiconductor chip 5 is always able to carry out the normal operation in such a way to discharge heat to the outside during the operation of the LED power source current control device 1. If the heat radiation substrate 200 is attached to the PCB substrate 100, the heat which may generate at the PCB substrate 100 can be easily conducted to the outside via the heat radiation substrate 200, it becomes possible to prevent the PCB substrate 100 from continuously becoming a high temperature state. In this way, any malfunction of the semiconductor chip 55 due to a high temperature can be prevented.

In order for the heat, which may generate at the PCB substrate 10, to be easily and fast conducted via the heat radiation substrate, one or more holes 101, 102, 103 and 104 may be formed at the PCB substrate 100. The PCB substrate 100 and the heat radiation substrate 200 may be connected using metallic pins 400 and 500 via the aforementioned holes 101, 102, 103 and 104.

If the holes 101, 102, 103 and 104 are formed at the PCB substrate 100, and the PCB substrate 100 and the heat radiation substrate 200 are connected using the metallic pins 400 and 500 via the holes 101, 102,103 and 104, it becomes possible to easily discharge heat to the outside, wherein the heat may occur at where the heat radiation substrate 200 does not contact with the PCB substrate 100.

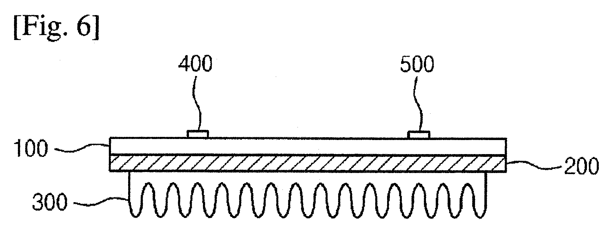

Figure 6 is a view illustrating a configuration wherein a heat conduction can be readily carried out by adding a heat radiation substrate to a heat radiation plate according to an embodiment of the present invention.

In the present invention, in order to faster radiate the heat which generates during the operation of the LED power source current control device 1, a heat radiation plate 300 may be further added to the heat radiation substrate 200, wherein the heat radiation plate 300 has a wider cross section contacting with air.

As illustrated in Figure 6, the heat radiation plate 300 one surface of which are formed in a protruded structure, is attached to the heat radiation substrate 200, whereby the heat which may generate during the operation of the LED power source current control device 1, can be faster discharged to the outside.

For this operation, the heat radiation plate 300 may be made of a bimetal or a shape-memory alloy, so the protruded structure on which heat generation focuses, has a wider cross section than other portions, thus faster discharging the heat.

As the present invention may be embodied in several forms without departing from the spirit or essential characteristics thereof, it should also be understood that the above-described examples are not limited by any of the details of the foregoing description, unless otherwise specified, but rather should be construed broadly within its spirit and scope as defined in the appended claims, and therefore all changes and modifications that fall within the meets and bounds of the claims, or equivalences of such meets and bounds are therefore intended to be embraced by the appended claims.

### Industrial applicability

In the present invention, the switching operation can be carried out using a semiconductor chip, so a compact-sized and slim LED power source current control device can be made in the form of a module, whereupon it can be readily built in a lighting fixture.

Moreover, since current can be supplied to the LEDs via the semiconductor chip of a current distribution scheme, it is possible to resolve an electromagnetic wave (EMI) problem.

Furthermore, the configuration is simple, and less components are used, and any error does not generate, and the manufacturing does not cost a lot.

### Figure 1

- 11:: Fuse circuit unit
- 12:: Varistor circuit unit
- 20:: Rectification unit
- 30:: Temperature control unit
- 40:: Constant voltage output unit
- 50:: Current distribution unit
- 60:: Connector

## Claims

1. An LED (Light Emitting Diode) power source current control device, comprising:
a current control unit which is configured to allow a constant current to be outputted in such a way to control an over current if an input voltage is inputted in the form of an over voltage;
a rectification unit which is configured to output a rectification voltage in such a way to rectify an alternating current voltage which is outputted from the current control unit;
a constant voltage output unit which is connected to an output terminal of the rectification unit and is able to protect an LED from the over voltage and output a voltage over a constant voltage;
a current distribution unit which is configured to receive the rectification voltage and distribute the current based on the size of the rectification voltage and output the current; and
a connector which is connected to one or more LEDs and is configured to supply to the LED the current which is outputted from the current distribution unit.

2. The device of claim 1, wherein the current control unit comprises:
a fuse circuit unit which includes a fuse and is configured to disconnect the fuse if a voltage is inputted, wherein the voltage irreversibly causes an abnormal state in the operation of any of the rectification unit, the constant voltage output unit and the current distribution unit; and
a varistor circuit unit equipped with a varistor which is able to prevent any abnormal operation due to an over current in such a way to flow a part of the over current to the ground, wherein the over current generates due to a surge voltage if the surge voltage generates.

3. The device of claim 1, further comprising:
a temperature control unit which includes a variable resistor and is configured to control the heat which generates at the LED power source current control device in such a way to control the variable resistor.

4. The device of claim 1, wherein the current distribution unit is formed of a semiconductor chip which is able to minimize the phase angles of current and voltage and provide a low THD (Total Harmonic Distortion) by which any high power factor and voltage distortion can be prevented.

5. The device of claim 1, wherein the current distribution unit comprises a current control setting circuit unit which is able to control the current outputted from the current distribution unit to be evenly outputted.

6. The device of claim 1, further comprising:
a PCB (Printed Circuit Board) substrate at which the current control unit, the rectification unit, the constant voltage output unit, the current distribution unit and the connector are mounted; and
a heat radiation substrate which is made of a metal having a high heat conductivity and is disposed contacting with the PCB substrate.

7. The device of claim 6, wherein one or more holes are formed at the PCB substrate, and the heat radiation substrate and the PCB substrate contact with each other using metallic pins via the holes.

8. The device of claim 1, wherein one or more connectors are connected via the connector, and the LED connected to the constant voltage output unit among the LEDs is configured to always operate irrespective of an input voltage, and the LED connected to the current distribution unit among the LEDs is configured to operate by the current which is distributed by the current distribution unit in response to the input voltage.
